(19) Europäisches Patentamt / European Patent Office / Office européen des brevets

(11) **EP 1 730 577 B1**

(12) **FASCICULE DE BREVET EUROPEEN**

(45) Date de publication et mention
de la délivrance du brevet:
**31.08.2016 Bulletin 2016/35**

(21) Numéro de dépôt: **05739684.8**

(22) Date de dépôt: **31.03.2005**

(51) Int Cl.:
*G02B 3/04* *(2006.01)*   *G02B 3/08* *(2006.01)*
*G02B 27/01* *(2006.01)*

(86) Numéro de dépôt international:
**PCT/FR2005/050203**

(87) Numéro de publication internationale:
**WO 2005/101093 (27.10.2005 Gazette 2005/43)**

(54) **CONDUIT OPTIQUE DESTINE A LA REALISATION D'UN AGENCEMENT D'AFFICHAGE ELECTRONIQUE**

OPTISCHER LEITER ZUR REALISIERUNG EINER ELEKTRONISCHEN ANZEIGEANORDNUNG

OPTICAL PIPE FOR MAKING AN ELECTRONIC DISPLAY ARRANGEMENT

(84) Etats contractants désignés:
**AT BE BG CH CY CZ DE DK EE ES FI FR GB GR HU IE IS IT LI LT LU MC NL PL PT RO SE SI SK TR**

(30) Priorité: **02.04.2004 FR 0450655**

(43) Date de publication de la demande:
**13.12.2006 Bulletin 2006/50**

(73) Titulaire: **Essilor International**
**94227 Charenton le Pont (FR)**

(72) Inventeur: **MOLITON, Renaud**
**F-94227 CHARENTON-LE-PONT (FR)**

(74) Mandataire: **Lenne, Laurence et al**
**Ipsilon**
**Le Centralis**
**63, avenue du Général Leclerc**
**92340 Bourg-la-Reine (FR)**

(56) Documents cités:
**US-A- 4 711 512    US-A- 6 023 372**
**US-B1- 6 349 004**

**Description**

La présente invention se rapporte à un conduit optique destiné à la réalisation d'un agencement d'affichage électronique monté sur une monture de type paire de lunettes.

Un tel agencement d'affichage est décrit dans le brevet US 6 023 372 et représenté en vue de dessus sur la figure 1.

Un tel agencement 10 comprend un ensemble de boîtier 16 comportant un premier boîtier 20 contenant un circuit de réception de données ou d'images et contenant un ensemble générateur d'images. La lumière transmise par cet ensemble générateur d'images est relayée par l'intermédiaire d'un dispositif optique 14 vers l'oeil de l'utilisateur par exemple au travers d'une lentille de lunette 24. Ce conduit optique 14 comprend un relais optique rectiligne transparent 26 transmettant la lumière selon son axe longitudinal AA' et un ensemble de déviation 28 comprenant un miroir 30 disposé sur une surface inclinée par rapport au premier axe AA' et une lentille 32 asphérique dont l'axe de révolution B-B' est ici perpendiculaire au premier axe A-A', et disposée au droit de cette paroi inclinée. L'ensemble de boîtier 16 est monté sur une branche 34 d'une monture de paire de lunettes grâce à un agencement d'accrochage 36.

Le conduit présente une hauteur maximale donnée $H_{max}$ hors l'épaisseur de la lentille et une longueur moyenne donnée $L_{moy}$ sur son axe longitudinal A-A'. A titre d'exemple, un tel conduit optique connu présente une hauteur maximale $H_{max}$ de 11 millimètres et une longueur moyenne $L_{moy}$ de 32 millimètres. Avec un tel agencement connu, il peut être obtenu une image vue par l'utilisateur de taille angulaire apparente de 11,5°.

Le conduit est avantageusement réalisé en matière thermoplastique.

Le but de l'invention est de permettre l'obtention d'une image de plus grande taille, tout en conservant une bonne qualité d'image et quelle que soit la longueur $L_{moy}$ du conduit.

En effet, avec l'agencement connu, un agrandissement de l'image conduit inévitablement à des problèmes de qualité de cette image et en particulier au défaut optique qu'est le chromatisme et plus spécifiquement le chromatisme transverse. Les aberrations monochromatiques augmentent également fortement.

Le document de brevet US 6 349 004 décrit un agencement optique destiné en particulier à un agencement d'affichage électronique, et destiné à transmettre des signaux de lumière d'une de ses extrémités dite surface d'entrée à son autre extrémité dite surface de sortie vers l'oeil d'un utilisateur pour la vision d'une image virtuelle. Cet agencement comporte un composant diffractif qui est un élément répondant à l'équation d'un composant asphérique de révolution.

Selon cet agencement connu, l'agencement optique est constitué de plusieurs éléments optiques assemblés et le composant diffractif est constitué d'une lentille séparée, qui est disposée devant un assemblage d'éléments optiques, en entrée des signaux optiques.

Ce mode de réalisation à plusieurs éléments ou lentilles est de montage complexe et coûteux.

L'invention résout ce problème en proposant un conduit optique qui est réalisé d'une seule pièce et peut par exemple être fabriqué par injection de matière plastique, tout en procurant une image de grande taille et de bonne qualité.

Pour ce faire, l'invention propose un conduit optique destiné en particulier à un agencement d'affichage électronique, selon la revendication 1.

Ce mode de réalisation présente l'avantage que la surface diffractive est alors à l'intérieur de l'agencement d'affichage et n'est pas exposé à un encrassement par poussière.

Ainsi peut être obtenu un conduit permettant l'affichage d'une image de taille angulaire supérieure à 15° et de bonne qualité.

Un conduit conforme à l'invention est fabriqué en une seule pièce, de préférence en matière thermoplastique moulée. Il est donc de fabrication relativement simple et de coût intéressant.

Par ailleurs, il est avantageux d'avoir une longueur de conduit relativement importante, car c'est grâce à cette longueur que le porteur peut conserver une vision de son environnement par transparence au travers du relais du conduit. L'invention résout le problème de qualité de l'image tout en maintenant une longueur de conduit suffisante pour permettre de conserver au porteur une bonne vision de son environnement au travers de ce conduit.

Un composant diffractif signifie ici un composant optique qui modifie les fronts d'onde en les segmentant et en redirigeant ces segments par l'utilisation d'interférences et de contrôle de phase.

Selon un mode de réalisation préféré, le composant diffractif est un élément de type « kinoform ».

Un élément de type « kinoform » signifie ici un élément diffractif dont les surfaces de contrôle de phase varient de façon douce et unie.

Et avantageusement, il est un élément de type « kinoform » répondant à l'équation d'un composant asphérique de révolution modulo une profondeur de saut.

De plus, avantageusement, au moins l'une desdites surfaces est une surface asphérique comprenant une surface dite utile traversée par la lumière dont le signe de courbure locale change au moins une fois.

Cette conformation permet d'augmenter la qualité de l'image en contrôlant de façon très satisfaisante le niveau d'astigmatisme et de courbure de champ dans l'image.

Cette surface asphérique peut être la surface de sortie, qui plus avantageusement encore est de révolution.

Elle porte avantageusement par ailleurs l'essentiel de la puissance dioptrique du conduit optique.

De préférence, ladite surface perfectionnée est également une surface asphérique.

Et, avantageusement, ladite surface asphérique est de révolution.

Avantageusemnt, ladite surface asphérique comprend sur ladite surface utile au moins un point d'inflexion sur son profil radial pour lequel la dérivée seconde selon la distance radiale par rapport au centre de la surface utile s'annule et change de signe à son passage.

L'image du composant diffractif peut avoir une proximité inférieure à -4 Dioptries, plus précisément inférieure à-10 Dioptries, ou avoir une proximité supérieure à 0 Dioptries.

De préférence, l'invention concerne un conduit tel que précisé ci-dessus, comportant un relais optique formé d'un barreau parallélépipédique destiné à transmettre la lumière selon son axe longitudinal, dit premier axe, et présentant à une de ses extrémités ladite surface d'entrée et à son autre extrémité une paroi de réflexion inclinée par rapport audit premier axe et une surface de sortie dont l'axe de révolution est contenu dans un plan de symétrie longitudinal.

L'invention concerne également un agencement d'affichage électronique pouvant être monté sur une monture de type paire de lunettes ou sur un système spécifique se positionnant devant les yeux d'un utilisateur, comportant au moins un conduit optique tel que précisé ci-dessus.

L'agencement d'affichage peut comprendre deux conduits optiques et réaliser un affichage binoculaire ou bioculaire.

L'invention est décrite ci-après plus en détail en relation avec des figures ne représentant qu'un mode de réalisation préféré de l'invention.

La figure 1, vue de dessus d'un agencement d'affichage électronique connu monté sur une monture de type paire de lunettes, a déjà été précisée ci-dessus.

La figure 2 est une vue schématique de dessus d'un agencement d'affichage électronique connu, selon une variante.

La figure 3 est une vue partielle en coupe selon l'axe A-A' du conduit optique conforme à l'invention.

La figure 4 est une vue partielle plus détaillée en coupe selon l'axe A-A' de la surface d'entrée conduit optique conforme à l'invention.

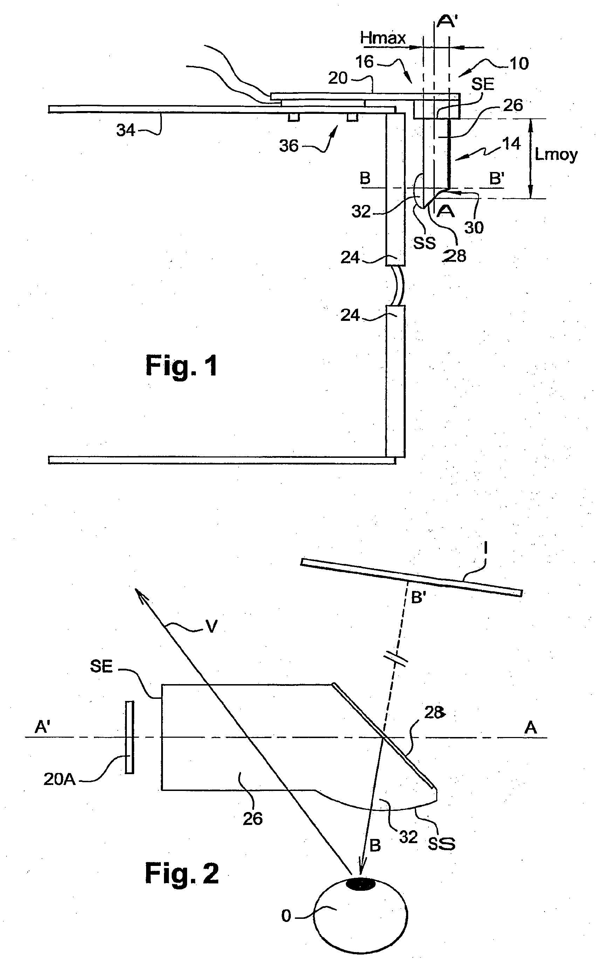

Sur la figure 1, sont représentés un mode de réalisation du conduit optique ainsi qu'un mode de montage de ce conduit, ici sur une monture de type paire de lunettes.

Dans le cadre de l'invention, le conduit optique 14 peut être légèrement différent.

Cette variante est représentée sur la figure 2. Un micro écran 20A est schématisé contenu dans un boîtier tel que le boîtier 20 représenté sur la figure 1. L'image vue par le porteur est schématisée en I.

Ici, l'axe de révolution B-B' de la lentille 32 n'est pas perpendiculaire au premier axe A-A' mais incliné d'un angle compris entre 65 et 90° par rapport à cet axe. Ceci permet une adaptation ergonomique du conduit optique une fois monté, ce dernier suivant la forme du visage de l'utilisateur, dont est représenté l'oeil O.

Par ailleurs, le conduit peut également être monté sur un système spécifique se positionnant devant les yeux d'un utilisateur, autre qu'une monture de lunette.

Est également illustré sur cette figure 2, l'intérêt d'avoir un relais 26 relativement long. En effet, grâce à cette longueur, le porteur peut conserver une vision de son environnement par transparence au travers du relais du conduit. Cette vision est illustrée par la flèche V.

Selon ce mode de réalisation, le conduit optique comporte donc un relais optique 26 formé d'un barreau parallélépipédique destiné à transmettre la lumière selon son axe longitudinal A-A', dit premier axe, et présentant à une de ses extrémités une surface d'entrée SE et à son autre extrémité une paroi de réflexion inclinée 28 par rapport audit premier axe et une surface de sortie SS, plus précisément une lentille 32 dont l'axe de révolution B-B' est contenu dans un plan de symétrie longitudinal.

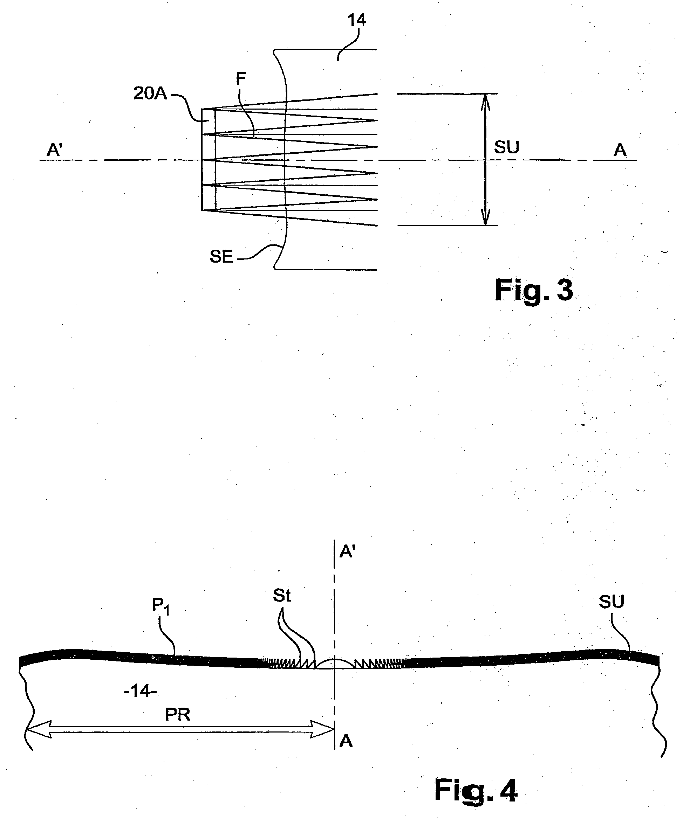

Selon le mode de réalisation préféré de l'invention, afin de pouvoir obtenir une image de grande taille tout en conservant une image de bonne qualité, la surface d'entrée SE est conformée comme représenté sur les figures 3 et 4.

Sur la figure 3, sont représentés cette surface d'entrée SE du conduit 14 et le micro écran 20A associé. De ce micro écran 20A sont émis des faisceaux de lumière F. La surface utile SU est la partie de la surface d'entrée traversée par ces faisceaux de lumière, issus du micro-écran et se propageant jusqu'à la pupille de l'oeil de l'utilisateur, que l'on considère avantageusement comme ayant un diamètre de 8 mm au moins pour le calcul de l'aire de la surface utile.

La surface d'entrée SE étant pourvue d'un composant diffractif et plus précisément d'une surface diffractive conformée directement sur la surface d'entrée et possédant des anneaux de discontinuité de type « kinoform », on adapte le reste de la conception optique de telle sorte que l'image de cette surface d'entrée perçue par le porteur soit située en dehors de la plage de mise au point de ce dernier. A titre d'exemple, dans le mode de réalisation de l'invention, cette proximité de visualisation de l'image de la surface d'entrée SE est inférieure à -4 Dioptries, de préférence inférieure à -10 Dioptries, ou bien cette proximité en Dioptries est positive, l'image étant alors située « derrière la tête » du porteur. De cette façon, le porteur ne sera jamais perturbé par une image parasite du composant diffractif.

Le chromatisme transverse peut être calculé à partir des valeurs de longueur d'onde des pics d'émission rouge et bleue du micro écran 20A. Typiquement, cette valeur est de 460 nm pour le rouge et de 630 nm pour le bleu. Avantageusement, on prend en compte au moins une longueur d'onde supplémentaire, située sur le pic d'émission vert du micro-écran, soit environ 516 nm, afin de tenir compte du repliement de la tache d'aberration chromatique.

De préférence, la puissance du composant diffractif est choisie de telle sorte que la valeur du chromatisme transverse perçu par l'utilisateur est inférieure à 7 arcmins pour un utilisateur ayant une pupille disposée entre 10 et 25 mm de la surface de sortie SS et située sur l'axe optique de sortie des signaux.

La surface utile SU est représentée plus en détail sur la figure 4.

Elle présente donc une surface diffractive destinée à supprimer le chromatisme, portée par une surface asphérique destinée à contrôler le niveau d'astigmatisme et de courbure de champ.

Cette surface asphérique est ici de plus à symétrie de révolution. Sur la surface utile SU, le signe de la dérivée seconde du profil radial de cette surface porteuse de la surface diffractive change au moins une fois. Selon l'exemple représenté, cette surface présente un point d'inflexion P1 le long de son profil radial PR pour lequel la condition de changement de signe de la dérivée seconde est remplie.

Si on note $Z(h)$, l'équation du profil radial, cela signifie que sur le domaine de définition, ou domaine utile, correspondant à la portion d'espace sur laquelle est définie la surface utile, il existe au moins une valeur h0 telle que :

$$(d^2Z/dh^2)(h0)=0 \text{ et change de signe au passage de } h0.$$

Plus généralement, ladite surface perfectionnée comprend une surface dite utile traversée par la lumière en provenance du micro écran et allant vers l'oeil du porteur pour laquelle il existe une inversion du signe de la courbure locale.

La hauteur d'impact de cette surface utile SU étant appelée h, la surface asphérique porteuse du composant diffractif répond à l'équation :

$$Zsupport(h)=c_1.h^2/(1+SQRT(1-(1+k_1).c_1{}^2.h^2)) + A_1.h^4 + B_1.h^6 + C_1.h^8 + D_1.h^{10} + E_1.h^{12} + F_1.h^{14} + G_1.h^{16} + H_1.h^{18} + J_1.h^{20}$$

Où $Zsupport(h)$ est la coordonnée de la surface parallèle à l'axe z,
$c_1$ est la courbure au pole de la surface,
ki le coefficient conique et

$A_1$, $B_1$, $C_1$... représentent les coefficients polynomiaux d'asphéricité de la surface.

$Zsupport(h)$ est l'équation générale d'une surface asphérique de révolution.

La surface diffractive est quant à elle réalisée par des stries St concentriques sur cette surface utiles SU : il s'agit d'un profil dit « kinoform ».

L'équation de la surface diffractive s'écrit comme celle d'une surface asphérique de révolution modulo une valeur de saut s:

$$D(h) = mod[Zdiffractif(h) , s]$$

Avec

$Zdiffractif(h)=c_2.h^2/(1+SQRT(1-(1+k_2).c_2{}^2.h^2)) + A_2.h^4 + B_2.h^6 + C_2.h^8 + D_2.h^{10} + E_2.h^{12} + F_2.h^{14} + G_2.h^{16} + H_2.h^{18} + J_2.h^{20}$
où $Zdiffractif(h)$ est la coordonnée de la surface parallèle à l'axe z,
$c_2$ est la courbure au pole de la surface,
$k_2$ le coefficient conique et

$A_2$, $B_2$, $C_2$... représentent les coefficients polynomiaux d'asphéricité de la surface.

$$Et : s = \lambda/[n(\lambda)-1]$$

où $\lambda$ est la longueur d'onde de conception du composant diffractif, généralement choisie au milieu de la bande visible du spectre lumineux, soit dans notre cas 550 nm,

n(λ) est l'indice du matériau constitutif du conduit de lumière pour la longueur d'onde de conception considérée λ.

Au final, l'équation de la surface représentée sur la figure 4 s'écrit sous la forme Z(h) = Zsupport(h) + Zdiffractif(h).

Par ailleurs, selon ce même mode de réalisation, la surface de sortie est avantageusement une surface asphérique de révolution.

L'invention n'est pas limitée au mode de réalisation précisément décrit.

Un conduit optique d'un autre type peut être utilisé selon l'invention, ce conduit étant de façon générale équivalent sur le plan optique à une lentille à surface d'entrée SE et surface de sortie SS.

Au lieu de la surface d'entrée, il peut être choisi la surface de sortie SS pour agencer le composant diffractif ainsi que la surface asphérique de contrôle de l'astigmatisme.

## Revendications

1. Conduit optique destiné en particulier à un agencement d'affichage électronique, et destiné à transmettre des signaux de lumière d'une de ses extrémités dite surface d'entrée (SE) à son autre extrémité dite surface de sortie (SS) vers l'oeil (O) d'un utilisateur pour la vision d'une image virtuelle (I), conduit comportant un composant diffractif sur une surface, dite surface perfectionnée, ce composant diffractif étant un élément répondant à l'équation d'un composant asphérique de révolution, conduit **caractérisé en ce que** qu'il comporte un relais optique (26) formé d'un barreau parallélépipédique destiné à transmettre la lumière selon son axe longitudinal (A-A'), dit premier axe, et présentant à une de ses extrémités ladite surface d'entrée (SE) et à son autre extrémité une paroi de réflexion inclinée (28) par rapport audit premier axe et une surface de sortie (SS) dont l'axe de révolution (B-B') est contenu dans un plan de symétrie longitudinal et **en ce que** ledit composant diffractif est conformé directement sur ladite surface d'entrée (SE).

2. Conduit selon la revendication 1, **caractérisé en ce que** le composant diffractif est un élément de type « kinoform ».

3. Conduit selon l'une des revendications précédentes, **caractérisé en ce qu'**au moins l'une desdites surfaces (SE, SS) est une surface asphérique comprenant une surface dite utile (SU) traversée par la lumière dont le signe de courbure locale change au moins une fois.

4. Conduit selon la revendication 3, **caractérisé en ce que** ladite surface asphérique est de révolution.

5. Conduit selon la revendication 3 ou 4, **caractérisé en ce que** ladite surface asphérique comprend sur ladite surface utile (SU) au moins un point d'inflexion sur son profil radial pour lequel la dérivée seconde selon la distance radiale par rapport au centre de la surface utile s'annule et change de signe à son passage.

6. Conduit selon l'une revendications précédentes, **caractérisé en ce que** l'image du composant diffractif a une proximité inférieure à -4 Dioptries.

7. Conduit selon la revendication précédente, **caractérisé en ce que** l'image du composant diffractif a une proximité inférieure à -10 Dioptries.

8. Conduit selon l'une revendications précédentes, **caractérisé en ce que** l'image du composant diffractif a une proximité supérieure à 0 Dioptries.

9. Agencement d'affichage électronique pouvant être monté sur une monture de type paire de lunettes ou sur un système spécifique se positionnant devant les yeux d'un utilisateur, comportant au moins un conduit optique selon l'une des revendications précédentes.

## Patentansprüche

1. Optische Leitung, die insbesondere für eine elektronische Anzeigeanordnung bestimmt ist und dazu bestimmt ist, Lichtsignale von einem ihrer Enden, die Eintrittsoberfläche (SE) genannt wird, zu ihrem anderen Ende, die Austrittsoberfläche (SS) genannt wird, in Richtung zum Auge (0) eines Anwenders zu übertragen, damit er ein virtuelles Bild (I) sieht, wobei die Leitung auf einer Oberfläche, die verbesserte Oberfläche genannt wird, eine lichtbrechende Komponente aufweist, wobei diese lichtbrechende Komponente ein Element ist, das eine Antwort auf die Gleichung einer rotationssymmetrischen asphärischen Komponente darstellt, wobei die Leitung **dadurch gekennzeichnet ist, dass** sie ein optisches Relais (26) enthält, das aus einem spatförmigen Stab gebildet ist, der dazu bestimmt ist, das Licht entlang seiner Längsachse (A-A'), die erste Achse genannt wird, zu übertragen und an einem seiner Enden die Eintrittsoberfläche (SE) und an seinem anderen Ende eine in Bezug auf die erste Achse geneigte Reflexionswand (28) aufweist und eine Austrittsoberfläche (SS), deren Rotationssymmetrieachse (B-B') in einer longitudinalen Symmetrieebene enthalten ist, aufweist, und dass die lichtbrechende Komponente direkt an die Eintrittsoberfläche (SE) angepasst ist.

2. Leitung nach Anspruch 1, **dadurch gekennzeichnet, dass** die lichtbrechende Komponente ein Element des "Kinoform"-Typs ist.

3. Leitung nach einem der vorhergehenden Ansprüche, **dadurch gekennzeichnet, dass** wenigstens eine der Oberflächen (SE, SS) eine asphärische Oberfläche ist, die eine sogenannte Nutzoberfläche (SU) enthält, durch die das Licht verläuft und bei der sich das Vorzeichen der lokalen Krümmung wenigstens einmal ändert.

4. Leitung nach Anspruch 3, **dadurch gekennzeichnet, dass** die asphärische Oberfläche rotationssymmetrisch ist.

5. Leitung nach Anspruch 3 oder 4, **dadurch gekennzeichnet, dass** die asphärische Oberfläche auf der Nutzoberfläche (SU) in ihrem radialen Profil wenigstens einen Wendepunkt besitzt, an dem die zweite Ableitung nach der radialen Strecke in Bezug auf die Mitte der Nutzoberfläche verschwindet und ihr Vorzeichen bei Durchgang ändert.

6. Leitung nach einem vorhergehenden Anspruch, **dadurch gekennzeichnet, dass** das Bild der lichtbrechende Komponente eine Proximität von weniger als -4 Dioptrien hat.

7. Leitung nach dem vorhergehenden Anspruch, **dadurch gekennzeichnet, dass** das Bild der lichtbrechende Komponente eine Proximität von weniger als -10 Dioptrien hat.

8. Leitung nach dem vorhergehenden Anspruch, **dadurch gekennzeichnet, dass** das Bild der lichtbrechende Komponente eine Proximität größer als 0 Dioptrien hat.

9. Elektronische Anzeigeanordnung, die an einem Gestell des Brillanttyps oder an einen spezifischen System, das vor den Augen eines Anwenders positioniert wird, montiert werden kann, die wenigstens eine optische Leitung nach einem der vorhergehenden Ansprüche umfasst.

**Claims**

1. Optical conduit in particular intended for an electronic display arrangement, and intended to transmit light signals, from one of its ends, called the entrance surface (SE), to its other end, called the exit surface (SS), toward the eye (0) of a user for vision of a virtual image (I), said conduit including a diffractive component on a surface, called the enhanced surface, this diffractive component being an element respecting the equation of an aspherical component of revolution, said conduit being **characterized in that** it includes an optical relay (26) formed by a parallelepipedal bar intended to transmit the light along its longitudinal axis (A-A'), called the first axis, and having at one of its ends said entrance surface (SE) and at its other end a reflective wall (28) that is inclined with respect to said first axis and to an exit surface (SS) the axis of revolution (B-B') of which is contained in a longitudinal plane of symmetry and **in that** said diffractive component is formed directly in said entrance surface (SE).

2. Conduit according to Claim 1, **characterized in that** the diffractive component is a "kinoform" element.

3. Conduit according to one of the preceding claims, **characterized in that** at least one of said surfaces (SE, SS) is an aspherical surface comprising what is called a useful area (SU) through which the light passes, the sign of the local curvature of which changes at least once.

4. Conduit according to Claim 3, **characterized in that** said aspherical surface is of revolution.

5. Conduit according to Claim 3 or 4, **characterized in that** said aspherical surface comprises, in said useful area (SU), at least one point of inflection in its radial profile at which the second derivative thereof with respect to radial distance from the centre of the useful area reaches zero and changes sign.

6. Conduit according to one of the preceding claims, **characterized in that** the image of the diffractive component has a proximity lower than -4 dioptres.

7. Conduit according to the preceding claim, **characterized in that** the image of the diffractive component has a proximity lower than -10 dioptres.

8. Conduit according to one of the preceding claims, **characterized in that** the image of the diffractive component has a proximity higher than 0 dioptres.

9. Electronic display arrangement able to be mounted on a frame of a pair of spectacles or on a specific system positionable in front of the eyes of a user, including at least one optical conduit according to one of the preceding claims.

Fig. 1

Fig. 2

**Fig. 3**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6023372 A

- US 6349004 B